# EUROPÄISCHE PATENTSCHRIFT

(11) **EP 3 838 707 B1**
(45) Veröffentlichungstag und Bekanntmachung des Hinweises auf die Patenterteilung: **07.06.2023**
(21) Anmeldenummer: 19217694.9
(22) Anmeldetag: 18.12.2019
(51) Int. Cl.: B61H 13/38

(54) **HÄNGELASCHE FÜR EIN BREMSGESTÄNGE EINES SCHIENENFAHRZEUGES, BREMSGESTÄNGE UND VERFAHREN ZUR SCHWINGUNGSDÄMPFUNG EINES BREMSGESTÄNGES EINES SCHIENENFAHRZEUGES**
SUSPENSION BRACKET FOR A BRAKE LINKAGE OF A RAIL VEHICLE, BRAKE LINKAGE AND METHOD FOR DAMPING THE VIBRATION OF A BRAKE LINKAGE OF A RAIL VEHICLE
ATTACHE DE SUSPENSION POUR UNE TIMONERIE DE FREIND'UN VÉHICULE FERROVIAIRE, TIMONERIE DE FREIN ET PROCÉDÉ D'AMORTISSEMENT DES VIBRATIONS D'UNE TIMONERIE DE FREIN D'UN VÉHICULE FERROVIAIRE

(43) Veröffentlichungstag der Anmeldung: 23.06.2021
(73) Patentinhaber: Faiveley Transport Witten GmbH, 58454 Witten (DE)
(72) Erfinder: Montua, Sebastian, 58454 Witten (DE)
(74) Vertreter: RGTH

(56) Entgegenhaltungen:
- WO-A1-2015/071254
- DE-A1- 2 364 594
- DE-A1- 4 300 179
- DE-A1- 10 304 717

## Beschreibung

Die vorliegende Erfindung betrifft eine Hängelasche für ein Bremsgestänge eines Schienenfahrzeuges, wobei die Hängelasche einen fahrzeugseitigen Anbindungsabschnitt, einen Mittelabschnitt und einen bremsenseitigen Anbindungsabschnitt umfasst. Ferner betrifft die vorliegende Erfindung ein Bremsgestänge für ein Schienenfahrzeug umfassend eine Hängelasche, ein Schienenfahrzeug umfassend ein Bremsgestänge sowie ein Verfahren zur Schwindungsdämpfung eines Bremsgestänges eines Schienenfahrzeuges.

### Technologischer Hintergrund

Schienenfahrzeuge weisen zur Verzögerung Bremsgestänge auf, welche meistens einen Bremszylinder und schwenkbar an einer Bremsbrücke befestigte Bremshebel mit endseitig an den Bremshebeln befestigten Bremsbelaghaltern umfassen. In den Bremsbelaghaltern sind Bremsbeläge gehalten. Bei Betätigung wirkt der Bremszylinder auf die Bremshebel, welche dadurch um eine Achse verschwenkt werden, sodass die Bremsbeläge gegen eine Bremsscheibe gedrückt werden. Das dadurch erzeugte Bremsmoment ist bestimmt durch das Produkt von Bremskraft und Hebelänge zur Radachse.

Bremsgestänge sind meist über die Bremsbrücke fahrzeugseitig an einem Drehgestell oder an einem Wagenkasten befestigt. Zusätzlich sind in der Regel Hängelaschen vorgesehen, an welchen die Bremshebel im Bereich der Bremsbelaghalter und Bremsbeläge fahrzeugseitig aufgehängt sind. Die Aufgabe der Hängelasche besteht im Übertragen der Bremsmomente auf das Fahrzeug, insbesondere auf das Drehgestell, sodass die Bremshebel um diese Kraftkomponente entlastet werden.

Aus der WO 2015/071254 A1 ist eine Vorrichtung zur Reduktion von Schwingungen eines Schienenfahrzeuges bekannt, wobei die Vorrichtung zumindest einen Fahrwerksrahmen, einen Bremsträger einer mechanisch wirkenden Bremseinheit sowie eine Aufhängung umfasst, wobei der Fahrwerksrahmen und der Bremsträger durch die Aufhängung miteinander verbunden sind. Um Schwingungen des Fahrwerks zu dämpfen, ist vorgesehen, dass die Aufhängung zumindest ein den Fahrwerksrahmen mit dem Bremsträger verbindendes elastisches Element aufweist, welches eine Bewegung des Bremsträgers in Querrichtung des Fahrwerkrahmens zulässt.

Aus der EP 0 676 321 A1 ist eine Doppelbremszange für Schienenfahrzeuge bekannt. Die Doppelbremszange weist zwei nebeneinander angeordnete Einzelzangen auf. Die Bremsbacken und der Bremszylinder sind in Fahrzeugquerebenen pendelnd aufgehängt, wobei zwei nahe der axialen Enden am Bremszylinder angreifende Hängelaschen zur Versteifung in Fahrzeuglängsrichtung starr doppelwandig ausgebildet sind.

Die DE 197 46 443 A1 offenbart eine Bremsbackenabstützvorrichtung, welche eine Y-förmige Hängelasche aufweist. Die Hängelasche ist gelenkig mit einer Bremsbacke und mit einem Bremskräfte aufnehmenden Teil eines Schienenfahrzeuges verbunden. Beim Bremsen auftretende Reibkräfte werden über das Bremsbackenabstützelement in das Schienenfahrzeug eingeleitet und abgestützt.

Eine weitere Bremsbackenabstützvorrichtung ist aus der DE 101 35 796 C1 bekannt. Bei der Bremsbackenabstützvorrichtung ist eine Bremsbacke einer Scheibenbremse über Schwenkgelenke und eine Y-förmige Hängelasche mit einem Drehgestellrahmen verbunden. Die Hängelasche weist einen im Wesentlichen parallel zu ihrer Längsrichtung verlaufenden seitlichen Ausleger beziehungsweise Führungsarm auf.

Aus der DE 103 04 717 A1 ist eine Klotzbremseinrichtung für Radsätze eines Drehgestells, beinhaltend ein mittels Hängelaschen am Drehgestell hängend befestigtes Bremsmodul bekannt, welches wenigstens zwei Bremskrafterzeuger umfasst, die gegenläufige und einer jeweils anderen Radachse zugeordnete Bremsklötze betätigen. Die Bremskrafterzeuger sind in ihrer Wirkrichtung gesehen quer zu den Radachsen und mit den zugeordneten Bremsklötzen in Flucht angeordnet.

Um Gewicht und dadurch Ressourcen einzusparen, werden die unterschiedlichen Komponenten eines Bremsgestänges zunehmend leichter und filigraner ausgeführt. Durch diese Maßnahmen erhöht sich jedoch die Wahrscheinlichkeit des Auftretens von Schwingungen, welche der strukturellen Integrität des Bremssystems schaden können. Derartige Schwingungen treten insbesondere dann auf, wenn die Resonanzfrequenz des Bremsgestänges sich innerhalb eines Frequenzbereichs der umliegenden Komponenten befindet.

### Darstellung der Erfindung: Aufgabe, Lösung, Vorteile

Es ist Aufgabe der vorliegenden Erfindung, eine Hängelasche für ein Bremsgestänge eines Schienenfahrzeuges bereitzustellen, mit welcher Schwingungen in einem Bremsgestänge gezielt reduziert werden können und mit welcher gleichzeitig eine filigrane und leichte Ausführung des Bremsgestänges möglich ist.

Ferner ist es Aufgabe der vorliegenden Erfindung, ein Bremsgestänge für ein Schienenfahrzeug mit einer Hängelasche, ein Schienenfahrzeug mit einem Bremsgestänge und ein Verfahren zur Schwingungsdämpfung eines Bremsgestänges eines Schienenfahrzeuges bereitzustellen, mit welchen die vorgenannten Vorteile erzielt werden.

Zur Lösung der der Erfindung zugrundeliegenden Aufgabe wird eine Hängelasche für ein Bremsgestänge eines Schienenfahrzeuges vorgeschlagen, wobei die Hängelasche einen fahrzeugseitigen Anbindungsabschnitt, einen Mittelabschnitt und einen bremsenseitigen Anbindungsabschnitt umfasst, wobei ferner vorgesehen ist, dass mindestens der Mittelabschnitt bezüglich einer durch den fahrzeugseitigen Anbindungsabschnitt und den bremsseitigen Anbindungsabschnitt verlaufenden Längsachse eine Mindestelastizität und/oder Steifigkeit aufweist, dass der Mittelabschnitt eine gebogene und/oder gekrümmte Form aufweist, und dass der Mittelabschnitt eine O-Form und/oder S-Form und/oder U-Form und/oder L-Form und/oder eine Helix-Form aufweist, sodass die Hängelasche bezüglich der Längsachse schwingfähig und/oder federnd ausgebildet ist.

Die Hängelasche ist bevorzugt dazu ausgebildet, ein Bremsgestänge an einem Schienenfahrzeug zu befestigen und/oder aufzuhängen. Der fahrzeugseitige Anbindungsabschnitt ist dabei insbesondere derjenige Bereich der Hängelasche, welcher an einem Drehgestell, einem Fahrwerk oder Fahrwerksrahmen oder an einem Wagenkasten des Schienenfahrzeugs befestigbar ist. Der bremsenseitige Anbindungsabschnitt ist jener Bereich der Hängelasche, welcher bevorzugt mit einem Bremshebel oder mit einem Bremsbelaghalter des Bremsgestänges verbindbar ist.

Zwischen dem fahrzeugseitigen Anbindungsabschnitt und dem bremsenseitigen Anbindungsabschnitt befindet sich ein Mittelabschnitt der Hängelasche. In etwa entlang einer gedachten Verbindungslinie zwischen dem bremsenseitigen Anbindungsabschnitt und dem fahrzeugseitigen Anbindungsabschnitt verläuft eine Längsachse der Hängelasche. Die Längsachse definiert in Richtung des fahrzeugseitigen Anbindungsabschnitts eine Längsrichtung der Hängelasche.

Erfindungsgemäß ist vorgesehen, dass mindestens der Mittelabschnitt der Hängelasche, bevorzugt die Hängelasche, bezüglich der Längsachse eine Mindestelastizität und/oder eine Steifigkeit aufweist, sodass die Hängelasche in der Längsachse schwingfähig und/oder federnd ausgebildet ist. Mit anderen Worten ist die Hängelasche bezüglich der Längsachse bzw. in der Längsrichtung ein schwingfähiges oder federndes Element, eine Feder oder ein Federsystem. Die Hängelasche kann zudem gedämpft schwingfähig sein oder ein gedämpftes federndes Element darstellen. Ein schwingfähiges Element ist dabei ein Element, welches periodisch potentielle Energie in kinetische Energie umwandeln kann.

Der besondere Vorteil einer entlang der Längsachse schwingfähigen oder federnd ausgebildeten Hängelasche besteht darin, dass diese aufgrund der Schwingfähigkeit bzw. Federeigenschaft eine Eigenfrequenz aufweist. Bei der Anordnung oder Verwendung der erfindungsgemäßen Hängelasche in einem Bremsgestänge eines Schienenfahrzeuges stellen die Hängelasche und der Rest des Bremsgestänges ein System gekoppelter Oszillatoren dar. Durch die Kopplung der Oszillatoren, d.h. der Hängelasche und der weiteren Teile des Bremsgestänges, erfolgt eine Verschiebung oder Veränderung mindestens einer der Eigenfrequenzen und/oder mindestens einer der Resonanzfrequenzen des Bremsgestänges. Durch die Verschiebung und/oder Veränderung mindestens einer der Eigenfrequenzen und/oder mindestens einer der Resonanzfrequenzen kann erreicht werden, dass diese nicht mehr innerhalb eines Frequenzbereichs der umliegenden Komponenten des Schienenfahrzeugs liegen. Schwingungen im Betrieb werden somit unterdrückt, und die Gefahr, dass Schwingungen die strukturelle Integrität des Bremsgestänges schädigen können, wird reduziert. Da Schwingungsanregungen des Bremsgestänges insgesamt unterdrückt werden, kann gleichzeitig sichergestellt werden, dass das Bremsgestänge weiterhin filigran und leicht ausgestaltet werden kann.

Bevorzugt ist die Hängelasche daher ausgebildet, bei der Verwendung in einem Bremsgestänge eines Schienenfahrzeuges eine Veränderung und/oder Verschiebung mindestens einer Eigenfrequenz und/oder einer Resonanzfrequenz des Bremsgestänges zu bewirken.

Weiter bevorzugt ist vorgesehen, dass mindestens eine Eigenfrequenz und/oder die Mindestelastizität und/oder die Steifigkeit der Hängelasche durch eine Wahl der Geometrie und/oder der Form der Hängelasche, insbesondere des Mittelabschnitts, und/oder durch eine Wahl des Materials der Hängelasche, einstellbar sind.

Insbesondere ist die Steifigkeit abhängig von der Materialwahl und der Geometrie beziehungsweise Form der Hängelasche.

Durch entsprechende Ausgestaltung, beispielsweise der Materialstärke und/oder der Formgebung, der Hängelasche und/oder der Materialwahl für die Hängelasche, kann eine Eigenfrequenz der Hängelasche so eingestellt werden, dass bei der Verwendung der Hängelasche in einem Bremsgestänge durch die Kopplung der Hängelasche mit den weiteren Bestandteilen des Bremsgestänges mindestens eine Eigenfrequenz und/oder Resonanzfrequenz des Bremsgestänges verschoben oder verändert wird.

Bevorzugt ist der fahrzeugseitige Anbindungsabschnitt schwenkbar mit einem Drehgestell, einem Fahrwerk oder Fahrwerksrahmen oder einem Wagenkasten des Schienenfahrzeugs verbindbar.

Weiter bevorzugt ist der bremsenseitige Anbindungsabschnitt schwenkbar mit einem Bremshebel oder mit einem Bremsbelaghalter des Bremsgestänges verbindbar.

Durch die schwenkbare Verbindung kann das Verschwenken des Bremshebels gegenüber dem Schienenfahrzeug bei einer Betätigung des Bremszylinders gewährleistet werden.

Für die schwenkbaren Verbindungen können im fahrzeugseitigen Anbindungsabschnitt und/oder im bremsenseitigen Anbindungsabschnitt Durchgangsbohrungen vorgesehen sein. Durch die Durchgangsbohrungen können Bolzen geführt werden, welche fahrzeugseitig oder bremsenseitig gelagert werden können. Ferner können in den Durchgangsbohrungen Lagerbuchsen zur Aufnahme der Bolzen angeordnet sein.

Erfindungsgemäß ist vorgesehen, dass die Hängelasche, insbesondere der Mittelabschnitt, eine gebogene und/oder gekrümmte Form aufweist.

Unter einer gebogenen oder gekrümmten Form wird dabei insbesondere eine Form verstanden, welche bezüglich der Längsachse oder Längsrichtung nicht gerade ausgeführt ist, sondern in zumindest einer Richtung senkrecht zur Längsachse aus einer durch die Längsachse verlaufenden Längsebene herausragt.

In besonders vorteilhafter Weise kann durch die gebogene oder gekrümmte Form die Schwingfähigkeit oder die Federeigenschaft der Hängelasche in der Längsachse ermöglicht werden.

Ferner können durch die konkrete Ausgestaltung der gekrümmten oder gebogenen Form des Mittelabschnitts die mindestens eine Eigenfrequenz, die Steifigkeit und/oder die Mindestelastizität der Hängelasche eingestellt werden.

Erfindungsgemäß ist weiter vorgesehen, dass der Mittelabschnitt eine O-Form und/oder eine S-Form und/oder eine U-Form und/oder eine L-Form und/oder eine Helixform aufweist.

Jede dieser Formen ist eine gebogene oder gekrümmte Form und ist insbesondere geeignet, der Hängelasche die Schwingfähigkeit bzw. die Federeigenschaft zu verleihen.

Ferner kann vorgesehen sein, dass die Hängelasche, insbesondere der Mittelabschnitt, mindestens zwei Arme aufweist, wobei die mindestens zwei Arme bevorzugt stoffeinteilig ausgebildet sind, oder wobei die mindestens zwei Arme bevorzugt als separate Arme ausgebildet und miteinander stoff- und/oder form- und/oder kraftschlüssig verbunden sind.

Die Hängelasche kann somit ein- oder mehrteilig ausgebildet sein.

Die mindestens zwei Arme können schon bei der Herstellung der Hängelasche, beispielsweise mit einem Gieß- oder Spanverfahren, stoffeinteilig ausgebildet sein. Grundsätzlich ist auch eine Ausgestaltung denkbar, bei der die mindestens zwei Arme in einem ersten Herstellungsschritt separat gefertigt werden und anschließend stoff- und/oder form- und/oder kraftschlüssig miteinander verbunden werden. Hierfür können unter anderem Schweißverfahren oder Schraubverbindungen verwendet werden.

Bevorzugt verlaufen die mindestens zwei Arme jeweils von dem fahrzeugseitigen Anbindungsabschnitt zu dem bremsenseitigen Anbindungsabschnitt. Die mindestens zwei Arme verbinden somit beide Anbindungsabschnitte und können zusammen den Mittelabschnitt der Hängelasche bilden.

Mit weiterem Vorteil kann vorgesehen sein, dass die Hängelasche, insbesondere der Mittelabschnitt, zwei Arme aufweist, wobei jeder der zwei Arme einen U-förmig gebogenen Bereich aufweist, wobei die Öffnungen der U-förmigen Bereiche der beiden Arme einander zugewandt sind, sodass der Mittelabschnitt im Wesentlichen eine O-Form aufweist.

Mit anderen Worten ist die Hängelasche von einer Seite senkrecht zur Längsachse gesehen derart ausgebildet, dass ein Bereich eines ersten Arms U-förmig in einer Richtung aus der Längsachse herausgebogen ist und dass ein zweiter Arm in der entgegengesetzten Richtung U-förmig aus der Längsachse herausgebogen ist, sodass die beiden sich gegenüberstehenden U-förmigen Bereiche im Wesentlichen einen O-förmigen Mittelabschnitt bilden.

Mit weiterem Vorteil kann vorgesehen sein, dass die Hängelasche, insbesondere der Mittelabschnitt, weiter insbesondere mindestens ein Arm, aus einem Metall, insbesondere Stahl oder Aluminium, oder aus einem Verbundwerkstoff, insbesondere aus einem kohlenstofffaserverstärktem Kunststoff oder einem glasfaserverstärktem Kunststoff, besteht.

Ferner kann vorgesehen sein, dass die mindestens zwei Arme aus unterschiedlichen Materialien bestehen und/oder unterschiedliche Steifigkeiten oder Elastizitäten aufweisen.

Durch die Wahl unterschiedlicher Materialien für die mindestens zwei Arme und insbesondere durch die Kombinationen verschiedener Materialien kann die Hängelasche, insbesondere die Steifigkeit und/oder Mindestelastizität der Hängelasche, für jeden konkreten Anwendungsfall an die dann zu erwartenden Schwingungen und Frequenzbereiche angepasst werden, sodass eine optimale Dämpfung von Schwingungen eines Bremsgestänges im Betrieb ermöglicht werden kann.

Die Steifigkeit der Hängelasche wird bevorzugt nicht nur durch die Materialwahl, sondern auch durch die Formgebung bestimmt. Somit kann durch die Wahl der Radien, Materialstärken etc. die Steifigkeit der Hängelasche angepasst werden. Insbesondere ist es möglich, falls mehrere Arme vorgesehen sind, dass die Arme verschieden geformt sind und verschiedene Materialstärken, Krümmungsradien usw. aufweisen.

Ferner kann vorgesehen sein, dass unterschiedliche Materialien in einer Zug- und/oder in einer Druckrichtung eingesetzt werden.

Unter einer Zugrichtung wird die Richtung verstanden, in der der fahrzeugseitige Anbindungsabschnitt und der bremsenseitige Anbindungsabschnitt auseinandergezogen werden. Unter einer Druckrichtung wird die Richtung verstanden, in der der fahrzeugseitige Anbindungsabschnitt und der bremsenseitige Anbindungsabschnitt aufeinander zu bewegt werden.

Es können somit insbesondere in Zug- und Druckrichtung unterschiedliche Steifigkeiten eingestellt werden. Durch diese Maßnahme wird eine noch bessere Anpassung der Hängelasche an die Einbausituation in einem Bremsgestänge ermöglicht.

Mit weiterem Vorteil kann vorgesehen sein, dass die Hängelasche ein stoßdämpfendes Material aufweist.

Die Hängelasche ist in diesem Fall nicht nur schwingfähig und/oder federnd ausgebildet, sondern weist zusätzlich noch Dämpfungseigenschaften auf.

Durch die Dämpfungseigenschaft der Hängelasche kann die mindestens eine Resonanzfrequenz des Bremsgestänges zusätzlich beeinflusst, insbesondere verschoben oder verändert, werden. Gleichzeitig sorgt die Dämpfungseigenschaft dafür, dass im Bremsgestänge auftretende Schwingungen schnell abklingen.

Mit Vorteil kann vorgesehen sein, dass das stoßdämpfende Material in einem Zwischenraum zwischen den mindestens zwei Armen der Hängelasche angeordnet ist.

Insbesondere wenn die Hängelasche im Wesentlichen O-förmig ausgebildet ist, beispielsweise durch zwei U-förmig ausgestaltete Arme, deren Öffnungen aufeinander zu gerichtet sind, kann in dem O-förmigen Zwischenraum zwischen den beiden Armen ein stoßdämpfendes Material eingesetzt bzw. angeordnet werden. Hierdurch wird eine kompakte Bauweise der Hängelasche ermöglicht.

Bevorzugt ist das stoßdämpfende Material ein Kunststoff, insbesondere ein Gummi. Ganz besonders bevorzugt ist das stoßdämpfende Material ein vulkanisierter Gummi.

Eine weitere Lösung der der Erfindung zugrundeliegenden Aufgabe besteht in der Bereitstellung eines Bremsgestänges eines Schienenfahrzeuges umfassend eine vorbeschriebene Hängelasche.

Sämtliche vorstehend im Zusammenhang mit der Hängelasche beschriebenen Merkmale und Eigenschaften können in entsprechender Weise auch auf das Bremsgestänge beziehungsweise auf die von dem Bremsgestänge umfasste Hängelasche übertragen werden.

Bevorzugt ist die Hängelasche des Bremsgestänges daher derart ausgebildet, dass diese eine Veränderung und/oder Verschiebung mindestens einer Eigenfrequenz und/oder mindestens einer Resonanzfrequenz des Bremsgestänges bewirkt.

Eine noch weitere Lösung der der Erfindung zugrundeliegenden Aufgabe besteht in der Bereitstellung eines Schienenfahrzeuges umfassend ein vorbeschriebenes Bremsgestänge.

Eine noch weitere Lösung der der Erfindung zugrundeliegenden Aufgabe besteht in der Bereitstellung eines Verfahrens zur Schwingungsdämpfung eines Bremsgestänges eines Schienenfahrzeuges, wobei das Bremsgestänge eine vorbeschriebene Hängelasche aufweist, wobei mindestens eine Eigenfrequenz und/oder mindestens eine Resonanzfrequenz des Bremsgestänges ermittelt wird, wobei eine Eigenfrequenz und/oder eine Mindestelastizität und/oder eine Steifigkeit für die Hängelasche derart bestimmt wird, dass bei der Verwendung der Hängelasche in dem Bremsgestänge eine Veränderung und/oder Verschiebung der mindestens einen Eigenfrequenz und/oder der mindestens einen Resonanzfrequenz des Bremsgestänges erfolgt.

Mit anderen Worten ist somit verfahrensgemäß vorgesehen, dass in einem ersten Schritt für ein bestehendes oder geplantes oder sich in der Entwicklung befindliches Bremsgestänge eine Frequenzanalyse durchgeführt wird, und dass mindestens eine Eigenfrequenz und oder mindestens eine Resonanzfrequenz des Bremsgestänges ermittelt wird. Ferner können auch Frequenzbereiche umliegender Komponenten vorab ermittelt werden. Anschließend wird dann eine Eigenfrequenz, Mindestelastizität oder Steifigkeit für eine Hängelasche derart bestimmt, dass, wenn diese Hängelasche in dem Bremsgestänge eingesetzt wird, die mindestens eine Eigenfrequenz und/oder die mindestens eine Resonanzfrequenz des Bremsgestänges aufgrund der Schwingungskopplung der Hängelasche mit den weiteren Bestandteilen des Bremsgestänges derart verschoben wird, dass die mindestens eine Eigenfrequenz und/oder die mindestens eine Resonanzfrequenz des Gesamtsystems aus Bremsgestänge und Hängelasche sich außerhalb der Frequenzbereiche der umliegenden Komponenten befindet.

Anschließend wird die entsprechend ausgestaltete Hängelasche mit dem Bremsgestänge verbunden beziehungsweise in ein Schienenfahrzeug eingesetzt.

Mit weiterem Vorteil kann dabei vorgesehen sein, dass die mindestens eine Eigenfrequenz und/oder die Mindestelastizität und/oder die Steifigkeit der Hängelasche durch eine Wahl der Geometrie und/oder Form der Hängelasche, insbesondere des Mittelabschnitts, und/oder durch eine Wahl des Materials der Hängelasche eingestellt werden.

### Kurze Beschreibung der Figuren

Die Erfindung wird nachstehend anhand der beigefügten Figuren näher erläutert.

Es zeigen
- Fig. 1: eine perspektivische Ansicht einer Hängelasche,
- Fig. 2: eine Querschnittsansicht der Hängelasche,
- Fig. 3: eine Seitenansicht der Hängelasche, und
- Fig. 4: ein Bremsgestänge mit zwei Hängelaschen.

### Ausführliche Beschreibung der Figuren

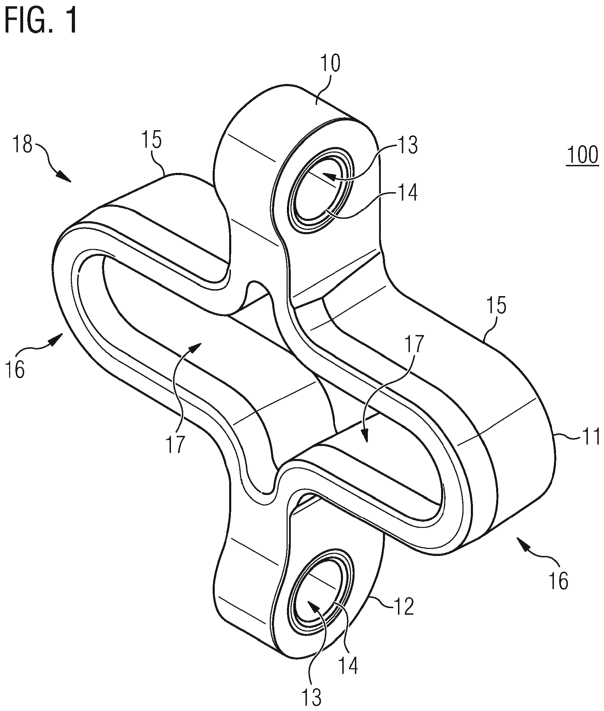

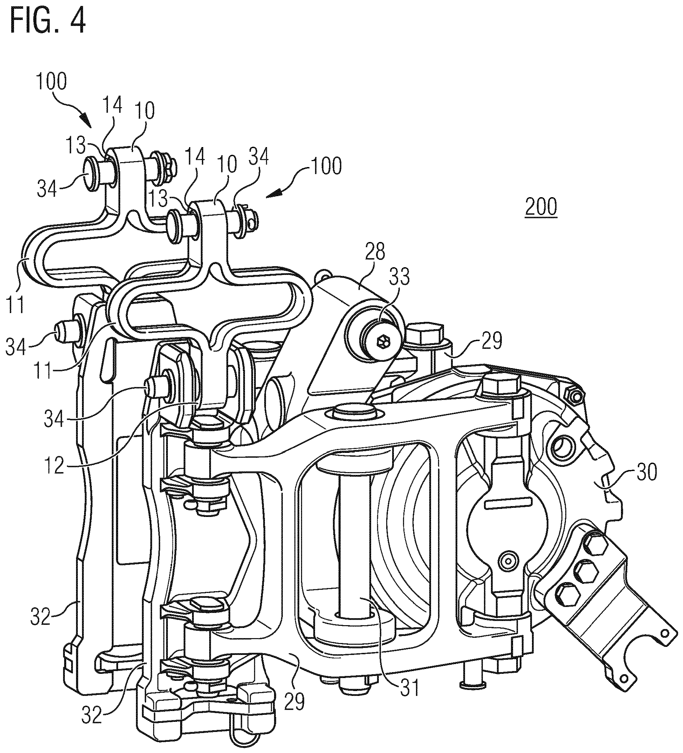

Fig. 1 zeigt eine perspektivische Ansicht einer Hängelasche 100 für ein Bremsgestänge 200 (Fig. 4) eines Schienenfahrzeugs. Die Hängelasche 100 weist einen fahrzeugseitigen Anbindungsabschnitt 10, einen Mittelabschnitt 11 und einen bremsenseitigen Anbindungsabschnitt 12 auf, wobei sich der Mittelabschnitt 11 zwischen dem fahrzeugseitigen Anbindungsabschnitt 10 und dem bremsenseitigen Anbindungsabschnitt 12 erstreckt. Der fahrzeugseitige Anbindungsabschnitt 10 und der bremsenseitige Anbindungsabschnitt 12 weisen je eine Durchgangsbohrung 13 zur fahrzeugseitigen und bremsenseitigen Anbindung der Hängelasche 100 auf. In jeder der Durchgangsbohrungen 13 ist eine Gleitbuchse 14 eingesetzt. Der Mittelabschnitt 11 umfasst zwei stoffeinteilig ausgebildete Arme 15. Jeder der Arme 15 weist einen U-Förmig ausgebildeten Bereich 16 auf. Die Öffnungen 17 der U-förmigen Bereiche 16 sind aufeinander zu gerichtet, so dass der Mittelabschnitt 11 insgesamt eine O-Form 18 aufweist.

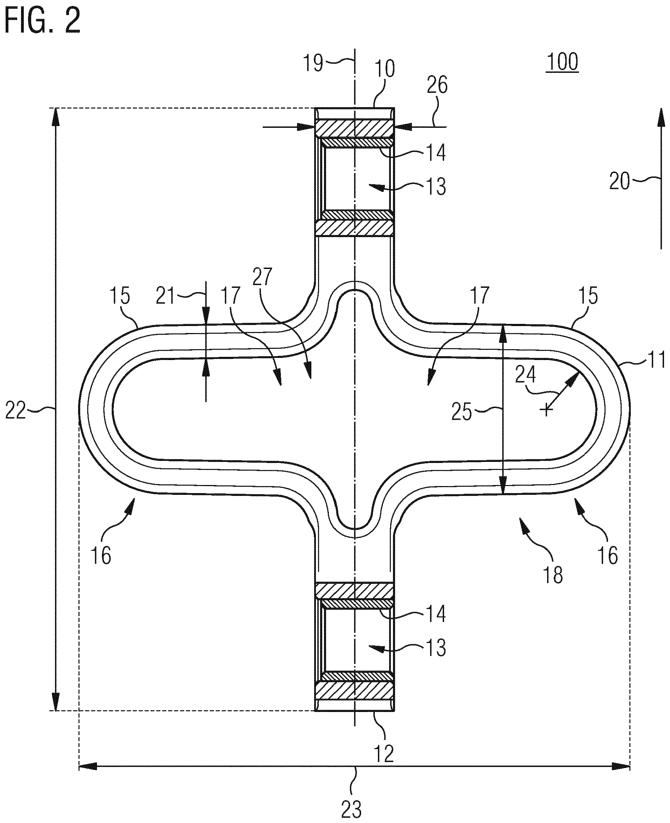

Fig. 2 zeigt eine Querschnittsansicht der Hängelasche 100. Aufgrund der O-Form 18 des aus den zwei Armen 15 gebildeten Mittelabschnitts 11 weist die Hängelasche 100, insbesondere der Mittelabschnitts 11, entlang einer durch den fahrzeugseitigen Anbindungsabschnitt 10 und den bremsenseitigen Anbindungsabschnitt 12 verlaufenden Längsachse 19 eine Mindestelastizität und/oder eine Steifigkeit auf, so dass die Hängelasche 100 bezüglich der Längsachse 19 bzw. einer entlang der Längsachse 19 verlaufenden Längsrichtung 20 schwingfähig und/oder federnd ausgebildet ist. Die Mindestelastizität und Steifigkeit der Hängelasche 100 wird auch durch die Wahl des Materials für die Arme 15 bestimmt. Beispielsweise können die Arme 15 aus Stahl oder Aluminium bestehen.

Die Materialstärke 21 der beiden Arme 15 des Mittelabschnitts 11 beträgt etwa 15 mm. Die Höhe 22 der Hängelasche 100 beträgt ca. 209 mm und die Breite 23 der Hängelasche 100 beträgt ca. 195 mm. Der Innenradius 24 der beiden U-förmigen Bereiche 16 beträgt ca. 18 mm und die Breite 25 der U-förmigen Bereiche 16 beträgt etwa 60 mm. Die Breite 26 der Anbindungsabschnitte 10, 12 beträgt jeweils ca. 32 mm.

In dem O-förmigen Zwischenraum 27 kann ein nicht näher dargestelltes stoßdämpfendes Material angeordnet werden.

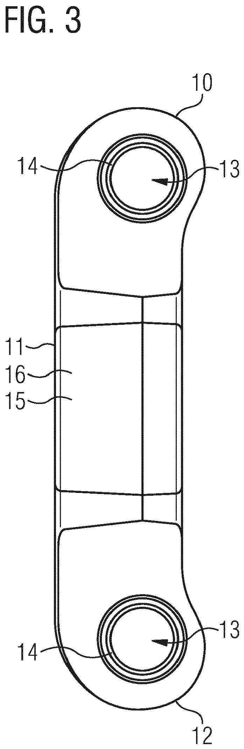

Fig. 3 zeigt eine Seitenansicht der Hängelasche 100. Zu erkennen sind die Durchgangsbohrungen 13 mit den Gleitbuchsen 14 in dem fahrzeugseitigen Anbindungsabschnitt 10 und dem bremsenseitigen Anbindungsabschnitt 12.

Fig. 4 zeigt eine perspektivische Ansicht eines Bremsgestänges 200 für ein nicht näher dargestelltes Schienenfahrzeug. Das Bremsgestänge 200 weist eine Bremsbrücke 28, zwei an der Bremsbrücke 28 schwenkbar gelagerte Bremshebel 29 und einen zwischen den Bremshebeln 29 angeordneten Bremszylinder 30 auf. Die Bremshebel 29 werden bei einer Betätigung des Bremszylinders 30 um mit der Bremsbrücke 28 verbundene vertikale Achsen 31 verschwenkt, sodass endseitig an den Bremshebeln 29 angeordnete Bremsbelaghalter 32 mit darin angeordneten Bremsbelägen (nicht dargestellt) aufeinander zu bewegt und an eine ebenfalls nicht gezeigte Bremsscheibe angelegt werden können. Die Bremsbrücke 28 ist über ein elektrisch isolierendes Kunststofflager 33 an dem Schienenfahrzeug, beispielsweise an einem Drehgestell des Schienenfahrzeugs, befestigbar. Über die Bremsbelaghalter 32 sind die Bremshebel 29 an dem Schienenfahrzeug aufgehängt. Hierfür sind Hängelaschen 100 vorgesehen, welche mit dem jeweiligen bremsenseitigen Anbindungsabschnitt 12 schwenkbar mit dem Bremsbelaghalter 32 verbunden sind. Die Hängelaschen 100 können schwenkbar über den fahrzeugseitigen Anbindungsabschnitt 10 mit dem Schienenfahrzeug, beispielsweise dem Drehgestell des Schienenfahrzeugs verbunden werden. Für die schwenkbaren Verbindungen sind jeweils in den Gleitbuchsen 14 in den Durchgangsbohrungen 13 der Anbindungsabschnitte 10, 12 angeordnete Bolzen 34 vorgesehen.

Werden die Bremsbeläge durch die Betätigung des Bremszylinders 30 an die Bremsscheibe angelegt, so ergibt sich als Produkt von Bremskraft und Hebelänge zur Radachse ein Bremsmoment. Dabei ist es Aufgabe der Hängelaschen 100, das resultierende Bremsmoment auf das Schienenfahrzeug zu übertragen, sodass die Bremshebel 29 um diese Kraftkomponente entlastet werden. Damit das Bremsgestänge 200 nicht zu Schwingungen angeregt wird, welche zu Schäden an dem Bremsgestänge 200 führen können, sind die Hängelaschen 100 schwingfähig und/oder federnd ausgebildet, so dass die Eigen- und/oder Resonanzfrequenzen des Bremsgestänges 200 derart verschoben oder verändert werden, dass diese außerhalb der Frequenzbereiche umliegender Bauteile liegen.

### Liste der Bezugszeichen

- 100: Hängelasche
- 10: Fahrzeugseitiger Anbindungsabschnitt
- 11: Mittelabschnitt
- 12: Bremsenseitiger Anbindungsabschnitt
- 13: Durchgangsbohrung
- 14: Gleitbuchse
- 15: Arm
- 16: U-Förmiger Bereich
- 17: Öffnung
- 18: O-Form
- 19: Längsachse
- 20: Längsrichtung
- 21: Materialstärke
- 22: Höhe der Hängelasche
- 23: Breite der Hängelasche
- 24: Innenradius
- 25: Breite U-förmiger Bereiche
- 26: Breite Anbindungsabschnitt
- 27: Zwischenraum
- 28: Bremsbrücke
- 29: Bremshebel
- 30: Bremszylinder
- 31: Achse
- 32: Bremsbelaghalter
- 33: Kunststofflager
- 34: Bolzen
- 200: Bremsgestänge

## Patentansprüche

1. Hängelasche (100) für ein Bremsgestänge (200) eines Schienenfahrzeugs, wobei die Hängelasche einen fahrzeugseitigen Anbindungsabschnitt (10), einen Mittelabschnitt (11) und einen bremsenseitigen Anbindungsabschnitt (12) umfasst, wobei mindestens der Mittelabschnitt (11) bezüglich einer durch den fahrzeugseitigen Anbindungsabschnitt (10) und den bremsenseitigen Anbindungsabschnitt (12) verlaufenden Längsachse (19) eine Mindestelastizität und/oder eine Steifigkeit aufweist, **dadurch gekennzeichnet, dass** der Mittelabschnitt (11) eine gebogene und/oder gekrümmte Form aufweist, und dass der Mittelabschnitt (11) eine O-Form (18) und/oder S-Form und/oder U-Form und/oder L-Form und/oder eine Helix-Form aufweist, so dass die Hängelasche bezüglich der Längsachse (19) schwingfähig und/oder federnd ausgebildet ist.

2. Hängelasche (100) nach Anspruch 1, **dadurch gekennzeichnet, dass** die Hängelasche ausgebildet ist, bei der Verwendung in einem Bremsgestänge (200) eines Schienenfahrzeugs eine Veränderung und/oder Verschiebung mindestens einer Eigenfrequenz und/oder mindestens einer Resonanzfrequenz des Bremsgestänges (200) zu bewirken.

3. Hängelasche (100) nach Anspruch 1 oder 2, **dadurch gekennzeichnet, dass** mindestens eine Eigenfrequenz und/oder die Mindestelastizität und/oder die Steifigkeit der Hängelasche durch eine Wahl der Geometrie und/oder der Form der Hängelasche, insbesondere des Mittelabschnitts (11), und/oder durch eine Wahl des Materials der Hängelasche einstellbar ist.

4. Hängelasche (100) nach einem der vorgenannten Ansprüche, **dadurch gekennzeichnet, dass** die Hängelasche (100), insbesondere der Mittelabschnitt (11), mindestens zwei Arme (15) aufweist, wobei die mindestens zwei Arme (15) bevorzugt stoffeinteilig ausgebildet sind, oder wobei die mindestens zwei Arme (15) bevorzugt als separate Arme (15) ausgebildet und miteinander stoff- und/oder form- und/oder kraftschlüssig verbunden sind, wobei die mindestens zwei Arme (15) besonders bevorzugt jeweils von dem fahrzeugseitigen Anbindungsabschnitt (10) zu dem bremsenseitigen Anbindungsabschnitt (12) verlaufen.

5. Hängelasche (100) nach einem der vorgenannten Ansprüche, **dadurch gekennzeichnet, dass** die Hängelasche (100), insbesondere der Mittelabschnitt (11), zwei Arme (15) aufweist, wobei jeder der zwei Arme (15) einen U-förmig gebogenen Bereich (16) aufweist, wobei die Öffnungen (17) der U-förmigen Bereiche (16) der beiden Arme (15) einander zugewandt sind, so dass der Mittelabschnitt (11) im Wesentlichen eine O-Form (18) aufweist.

6. Hängelasche (100) nach einem der vorgenannten Ansprüche, **dadurch gekennzeichnet, dass** die Hängelasche, insbesondere der Mittelabschnitt (11), weiter insbesondere mindestens ein Arm (15), aus einem Metall, insbesondere Stahl oder Aluminium, oder aus einem Verbundwerkstoff, insbesondere aus einem kohlenstofffaserverstärkten Kunststoff oder einem glasfaserverstärkten Kunststoff, besteht.

7. Hängelasche (100) nach einem der Ansprüche 4 bis 6, **dadurch gekennzeichnet, dass** die mindestens zwei Arme (15) aus unterschiedlichen Materialien bestehen und/oder unterschiedliche Steifigkeiten oder Elastizitäten aufweisen.

8. Hängelasche (100) nach einem der vorgenannten Ansprüche, **dadurch gekennzeichnet, dass** die Hängelasche ein stoßdämpfendes Material aufweist, wobei das stoßdämpfende Material bevorzugt in einem Zwischenraum (27) zwischen den mindestens zwei Armen (15) der Hängelasche angeordnet ist, und/oder wobei das stoßdämpfende Material ein Kunststoff, insbesondere ein, bevorzugt vulkanisierter, Gummi, ist.

9. Bremsgestänge (200) für ein Schienenfahrzeug umfassend eine Hängelasche (100) nach einem der Ansprüche 1 bis 8.

10. Bremsgestänge (200) nach Anspruch 9, **dadurch gekennzeichnet, dass** die Hängelasche (100) ausgebildet ist, eine Veränderung und/oder Verschiebung mindestens einer Eigenfrequenz und/oder mindestens einer Resonanzfrequenz des Bremsgestänges zu bewirken.

11. Schienenfahrzeug umfassend ein Bremsgestänge (200) nach Anspruch 9 oder 10.

12. Verfahren zur Schwingungsdämpfung eines Bremsgestänges (200) eines Schienenfahrzeugs, wobei das Bremsgestänge (200) eine Hängelasche (100) nach einem der Ansprüche 1 bis 8 umfasst, **dadurch gekennzeichnet, dass** mindestens eine Eigenfrequenz des Bremsgestänges (200) ermittelt wird, dass eine Eigenfrequenz und/oder eine Mindestelastizität und/oder eine Steifigkeit für die Hängelasche (100) derart bestimmt wird, dass bei der Verwendung der Hängelasche (100) in dem Bremsgestänge (200) eine Veränderung und/oder Verschiebung der mindestens einen Eigenfrequenz und/oder der mindestens einen Resonanzfrequenz des Bremsgestänges (200) erfolgt.

13. Verfahren nach Anspruch 12, **dadurch gekennzeichnet, dass** die eine Eigenfrequenz und/oder die Mindestelastizität und/oder die Steifigkeit der Hängelasche (100) durch eine Wahl der Geometrie und/oder Form der Hängelasche (100), insbesondere des Mittelabschnitts (11), und/oder durch eine Wahl des Materials der Hängelasche (100) eingestellt werden.

## Claims

1. Suspension bracket (100) for a brake linkage (200) of a rail vehicle, wherein the suspension bracket comprises a vehicle-side connection section (10), a middle section (11) and a brake-side connection section (12), wherein at least the middle section (11) with respect to a longitudinal axis (19) running through the vehicle-side connection section (10) and the brake-side connection section (12) has a minimum elasticity and/or rigidity, **characterized in that** the middle section (11) has a bent and/or curved shape, and that the middle section (11) has an O-shape (18) and / or S-shape and / or U-shape and / or L-shape and / or a helical shape, so that the suspension bracket is formed to be able to oscillate and/or be resilient with respect to the longitudinal axis (19).

2. Suspension bracket (100) according to claim 1, **characterized in that** the suspension bracket is formed to effect a change and/or displacement of at least one natural frequency and/or at least one resonant frequency of the brake linkage (200) when used in a brake linkage (200) of a rail vehicle.

3. Suspension bracket (100) according to claim 1 or 2, **characterized in that** at least one natural frequency and/or the minimum elasticity and/or the rigidity of the suspension bracket is adjustable by a selection of the geometry and/or the shape of the suspension bracket, in particular of the middle section (11), and/or by a selection of the material of the suspension bracket.

4. Suspension bracket (100) according to one of the preceding claims, **characterized in that** the suspension bracket (100), in particular the middle section (11), has at least two arms (15), wherein the at least two arms (15) are preferably formed from a single piece of material, or wherein the at least two arms (15) are preferably formed as separate arms (15) and are connected to one another in a materially-fitting and/or form-fitting and/or non-positive manner, wherein the at least two arms (15) particularly preferably each extend from the vehicle-side connection section (10) to the brake-side connection section (12).

5. Suspension bracket (100) according to one of the preceding claims, **characterized in that** the suspension bracket (100), in particular the middle section (11), has two arms (15), wherein each of the two arms (15) has a U-shaped arcuate region (16), wherein the openings (17) of the U-shaped regions (16) of the two arms (15) face each other, so that the middle section (11) essentially has an O-shape (18).

6. Suspension bracket (100) according to one of the preceding claims, **characterized in that** the suspension bracket, in particular the middle section (11), further in particular at least one arm (15), consists of a metal, in particular steel or aluminum, or of a composite material, in particular of a carbon fiber reinforced plastic or a glass fiber reinforced plastic.

7. Suspension bracket (100) according to one of claims 4 to 6, **characterized in that** the at least two arms (15) consist of different materials and/or have different degrees of rigidity or elasticity.

8. Suspension bracket (100) according to one of the preceding claims, **characterized in that** the suspension bracket has a shock-absorbing material, wherein the shock-absorbing material is preferably arranged in an intermediate space (27) between the at least two arms (15) of the suspension bracket, and/or wherein the shock-absorbing material is a plastic, in particular a, preferably vulcanized, rubber.

9. Brake linkage (200) for a rail vehicle comprising a suspension bracket (100) according to one of claims 1 to 8.

10. Brake linkage (200) according to claim 9, **characterized in that** the suspension bracket (100) is formed to effect a change and/or displacement of at least one natural frequency and/or at least one resonant frequency of the brake linkage.

11. Rail vehicle comprising a brake linkage (200) according to claim 9 or 10.

12. Method for vibration damping of a brake linkage (200) of a rail vehicle, wherein the brake linkage (200) comprises a suspension bracket (100) according to one of claims 1 to 8, **characterized in that** at least one natural frequency of the brake linkage (200) is determined, **in that** a natural frequency and/or a minimum elasticity and/or a rigidity for the suspension bracket (100) is determined in such a way that when the suspension bracket (100) is used in the brake linkage (200), a change and/or displacement in the at least one natural frequency and/or the at least one resonance frequency of the brake linkage (200) takes place.

13. Method according to claim 12, **characterized in that** the one natural frequency and/or the minimum elasticity and/or the rigidity of the suspension bracket (100) is adjusted by a selection of the geometry and/or shape of the suspension bracket (100), in particular of the middle section (11), and/or by a selection of the material of the suspension bracket (100).

## Revendications

1. Attache de suspension (100) pour une timonerie de frein (200) d'un véhicule ferroviaire, sachant que l'attache de suspension comprend une section de liaison du côté véhicule (10), une section centrale (11) et une section de liaison du côté frein (12), sachant qu'au moins la section centrale (11) comporte une élasticité minimale et/ou une rigidité eu égard à un axe longitudinal (19) passant par la section de liaison du côté véhicule (10) et la section de liaison du côté frein (12), **caractérisée en ce que** la section centrale (11) comporte une forme cintrée et/ou courbée et **en ce que** la section centrale (11) comporte une forme de O (18) et/ou une forme de S et/ou une forme de U et/ou une forme de L et/ou une forme hélicoïdale de telle manière que l'attache de suspension est constituée oscillatoire et/ou élastique eu égard à l'axe longitudinal (19).

2. Attache de suspension (100) selon la revendication 1, **caractérisée en ce que** l'attache de suspension est constituée pour occasionner une modification et/ou un décalage d'au moins une fréquence propre et/ou d'au moins une fréquence de résonance de la timonerie de frein (200) lors de l'utilisation dans une timonerie de frein (200) d'un véhicule ferroviaire.

3. Attache de suspension (100) selon la revendication 1 ou 2, **caractérisée en ce qu'**au moins une fréquence propre et/ou au moins l'élasticité minimale et/ou la rigidité de l'attache de suspension peut être réglée par un choix de la géométrie et/ou de la forme de l'attache de suspension, en particulier de la section centrale (11), et/ou par un choix du matériau de l'attache de suspension.

4. Attache de suspension (100) selon l'une quelconque des revendications précédentes, **caractérisée en ce que** l'attache de suspension (100), en particulier la section centrale (11), comporte au moins deux bras (15), sachant qu'au moins les deux bras (15) sont constitués de préférence en une pièce homogène ou sachant qu'au moins les deux bras (15) sont constitués de préférence sous la forme de bras séparés (15) et sont reliés entre eux par conformité de matière et/ou de forme et/ou de force, sachant qu'au moins les deux bras (15) passent de préférence en particulier respectivement de la section de liaison du côté véhicule (10) vers la section de liaison du côté frein (12).

5. Attache de suspension (100) selon l'une quelconque des revendications précédentes, **caractérisée en ce que** l'attache de suspension (100), en particulier la section centrale (11), comporte deux bras (15), sachant que chacun des deux bras (15) comporte une zone cintrée en forme de U (16), sachant que les ouvertures (17) des zones en forme de U (16) des deux bras (15) sont tournées l'une vers l'autre de telle manière que la section centrale (11) comporte pour l'essentiel une forme de O (18).

6. Attache de suspension (100) selon l'une quelconque des revendications précédentes, **caractérisée en ce que** l'attache de suspension, en particulier la section centrale (11), en plus en particulier au moins un bras (15), sont composés d'un métal, en particulier d'acier ou d'aluminium ou d'un matériau composite, en particulier d'une matière plastique renforcée avec des fibres de carbone ou d'une matière plastique renforcée avec des fibres de verre.

7. Attache de suspension (100) selon l'une quelconque des revendications 4 à 6, **caractérisée en ce qu'**au moins les deux bras (15) sont composés de différents matériaux et/ou de rigidités ou élasticités différentes.

8. Attache de suspension (100) selon l'une quelconque des revendications précédentes, **caractérisée en ce que** l'attache de suspension comporte un matériau amortissant les chocs, sachant que le matériau amortissant les chocs est disposé de préférence dans un espace intermédiaire (27) entre au moins les deux bras (15) de l'attache de suspension et/ou sachant que le matériau amortissant les chocs est une matière plastique, un caoutchouc de préférence vulcanisé.

9. Timonerie de frein (200) pour un véhicule ferroviaire comprenant une attache de suspension (100) selon l'une quelconque des revendications 1 à 8.

10. Timonerie de frein (200) selon la revendication 9, **caractérisée en ce que** l'attache de suspension (100) est constituée pour occasionner une modification et/ou un décalage d'au moins une fréquence propre et/ou d'au moins une fréquence de résonance de la timonerie de frein.

11. Véhicule ferroviaire comprenant une timonerie de frein (200) selon la revendication 9 ou 10.

12. Procédé d'amortissement des vibrations d'une timonerie de frein (200) d'un véhicule ferroviaire, sachant que la timonerie de frein (200) comprend une attache de suspension (100) selon l'une quelconque des revendications 1 à 8, **caractérisé en ce qu'** au moins une fréquence propre de la timonerie de frein (200) est établie, **en ce qu**'une fréquence propre et/ou une élasticité minimale et/ou une rigidité pour l'attache de suspension (100) est déterminée de telle manière que lors de l'utilisation de l'attache de suspension (100) dans la timonerie de frein (200), il se produit une modification et/ou un décalage d'au moins une fréquence propre et/ou d'au moins une fréquence de résonance de la timonerie de frein (200).

13. Procédé selon la revendication 12, **caractérisé en ce qu'**une fréquence propre et/ou l'élasticité minimale et/ou la rigidité de l'attache de suspension (100) sont réglées par un choix de la géométrie et/ou de la forme de l'attache de suspension (100), en particulier de la section centrale (11), et/ou par un choix du matériau de l'attache de suspension (100).
